(19) **Europäisches Patentamt European Patent Office Office européen des brevets**

(11) **EP 3 296 336 A1**

(12) **EUROPEAN PATENT APPLICATION**
published in accordance with Art. 153(4) EPC

(43) Date of publication:
**21.03.2018 Bulletin 2018/12**

(51) Int Cl.:
*C08G 18/00* (2006.01)        *A41C 3/14* (2006.01)
*C08G 18/79* (2006.01)        *C08G 101/00* (2006.01)

(21) Application number: **16792646.8**

(22) Date of filing: **09.05.2016**

(86) International application number:
**PCT/JP2016/063700**

(87) International publication number:
**WO 2016/181921 (17.11.2016 Gazette 2016/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.05.2015 JP 2015095607**
**28.01.2016 JP 2016014382**

(71) Applicant: **Mitsui Chemicals, Inc.**
**Minato-ku**
**Tokyo 105-7122 (JP)**

(72) Inventors:
• **KANAYAMA, Hiroshi**
**Sodegaura-shi**
**Chiba 299-0265 (JP)**
• **WATANABE, Minoru**
**Sodegaura-shi**
**Chiba 299-0265 (JP)**

• **KAJIURA, Makoto**
**Sodegaura-shi**
**Chiba 299-0265 (JP)**
• **NAKAGAWA, Toshihiko**
**Sodegaura-shi**
**Chiba 299-0265 (JP)**
• **NAKAGAWA, Aya**
**Sodegaura-shi**
**Chiba 299-0265 (JP)**
• **KIYONO, Shinji**
**Sodegaura-shi**
**Chiba 299-0265 (JP)**
• **MORITA, Hirokazu**
**Sodegaura-shi**
**Chiba 299-0265 (JP)**
• **YAMASAKI, Satoshi**
**Sodegaura-shi**
**Chiba 299-0265 (JP)**

(74) Representative: **Hoffmann Eitle**
**Patent- und Rechtsanwälte PartmbB**
**Arabellastraße 30**
**81925 München (DE)**

(54) **NON-YELLOWING FLEXIBLE POLYURETHANE FOAM, CLOTHING MATERIAL, BRASSIERE PAD, AND BRASSIERE CUP**

(57)     A non-yellowing flexible polyurethane foam is produced by allowing a polyisocyanate component to react with a polyol component in the presence of at least a catalyst and a blowing agent, wherein the polyisocyanate component contains 10 to 95 mass% of uretdione bimolecular-product of pentamethylenediisocyanate.

**Description**

TECHNICAL FIELD

The present invention relates to non-yellowing flexible polyurethane foam, an apparel material formed from the non-yellowing flexible polyurethane foam, a brassiere pad formed from the apparel material, and a brassiere cup including the brassiere pad.

BACKGROUND ART

Aromatic polyurethane foam produced by allowing aromatic polyisocyanate to react with polyol may go through discoloration when being exposed to ultraviolet ray or oxygen gas (for example, nitrogen oxide gas (NOx), etc).
Thus, a method has been known in which, non-yellowing polyurethane foam is made by using, as polyisocyanate, an aliphatic or alicyclic diisocyanate monomer or a prepolymer thereof.
However, a large amount of diisocyanate monomer is used in the above-described method as well, and therefore the method is not preferable in terms of occupational safety and health. Furthermore, in the above-described polyurethane foam, hardness may not be exhibited, and heat resistance may be poor.
Therefore, Patent Document 1 below has proposed a composition for polyurethane foam and mold in which as polyisocyanate, organic polyisocyanate that is a hexamethylenediisocyanate derivative having a uretdione bond and an isocyanurate bond is used, and having a high-density outer skin layer made of the organic polyisocyanate, polyol, a chain extender, blowing agent, and catalyst.

Citation List

Patent Document

Patent Document 1: Japanese Unexamined Patent Publication No. H9-104738

SUMMARY OF THE INVENTION

PROBLEM TO BE SOLVED BY THE INVENTION

However, in the composition for polyurethane foam and mold described in Patent Document 1, the organic polyisocyanate has low reactivity, and a large amount of urethane-forming catalyst has to be added to compensate for it, and therefore the polyurethane foam may have insufficient non-yellowing characteristics.
Furthermore, the polyurethane foam formed from the composition for polyurethane foam and mold described in Patent Document 1 has disadvantages in that it has high density, and soft touch may be damaged.
In this regard, examination by the present inventors has revealed the following: by using pentamethylenediisocyanate instead of hexamethylenediisocyanate, the density can be decreased and soft touch can be obtained, and at the same time, depending on conditions, yellowing characteristics may sometimes be poor.
Thus, an object of the present invention is to provide non-yellowing flexible polyurethane foam having soft touch and excellent non-yellowing characteristics, an apparel material formed from the non-yellowing flexible polyurethane foam, a brassiere pad formed from the apparel material, and a brassiere cup including the brassiere pad.

MEANS FOR SOLVING THE PROBLEM

The present invention [1] includes non-yellowing flexible polyurethane foam produced by allowing a polyisocyanate component to react with a polyol component in the presence of at least a catalyst and a blowing agent, wherein the polyisocyanate component contains 10 to 95 mass% of uretdione bimolecular-product of pentamethylenediisocyanate.
The present invention [2] includes the non-yellowing flexible polyurethane foam of [1] above, wherein the polyisocyanate component contains a uretdione derivative of pentamethylenediisocyanate, which includes the uretdione bimolecular-product, and a trimer derivative of aliphatic polyisocyanate.
The present invention [3] includes the non-yellowing flexible polyurethane foam of [2] above, wherein the trimer derivative includes an isocyanurate group and an allophanate group, and the content of the allophanate group is 0.10 mol or more and 0.70 mol or less relative to 1 mol of the isocyanurate group.
The present invention [4] includes the non-yellowing flexible polyurethane foam of [2] or [3] above, wherein the aliphatic polyisocyanate is pentamethylenediisocyanate and/or hexamethylenediisocyanate.

The present invention [5] includes an apparel material formed from the non-yellowing flexible polyurethane foam of any one of [1] to [4] above.

The present invention [6] includes a brassiere pad made from the apparel material of [5] above.

The present invention [7] includes a brassiere cup including the brassiere pad of [6] above.

The present invention [8] includes a method for producing non-yellowing flexible polyurethane foam, the method including allowing a polyisocyanate component containing 10 to 95 mass% of uretdione bimolecular-product of pentamethylenediisocyanate to react with a polyol component in the presence of at least a catalyst and a blowing agent.

EFFECTS OF THE INVENTION

In the non-yellowing flexible polyurethane foam of the present invention, the polyisocyanate component contains 10 to 95 mass% of uretdione bimolecular-product of pentamethylenediisocyanate.

Therefore, a non-yellowing flexible polyurethane foam with soft touch and excellent non-yellowing characteristics can be produced.

As a result, in the apparel material formed from the non-yellowing flexible polyurethane foam of the present invention, the brassiere pad of the present invention formed from the apparel material, and the brassiere cup of the present invention, touch and non-yellowing characteristics can be improved.

DESCRIPTION OF EMBODIMENTS

The non-yellowing flexible polyurethane foam of the present invention is produced by allowing a polyisocyanate component to react with a polyol component in the presence of at least a catalyst and a blowing agent.

That is, the non-yellowing flexible polyurethane foam of the present invention is a reaction product produced by allowing the polyisocyanate component and the polyol component to react and foam.

In the non-yellowing flexible polyurethane foam of the present invention, "non-yellowing" can be defined as the light resistance $\Delta b$ of polyurethane foam (measured in accordance with Examples to be described later) being, for example, 15.0 or less, preferably 12.0 or less.

In the non-yellowing flexible polyurethane foam of the present invention, "flexible" can be defined as, the hardness of the polyurethane foam (25%CLD, measured in accordance with Examples to be described later) being, for example, 40.0N/100 cm$^2$ or less, preferably 30.0N/100 cm$^2$ or less, more preferably 20.0N/100 cm$^2$ or less, even more preferably 15.0N/100 cm$^2$ or less, even more preferably 10.0N/100 cm$^2$ or less, even more preferably 6.0N/100 cm$^2$ or less, even more preferably 5.0N/100 cm$^2$ or less, particularly preferably 4.5N/100 cm$^2$ or less.

The polyisocyanate component includes a uretdione bimolecular-product of pentamethylenediisocyanate.

Examples of the pentamethylenediisocyanate include, for example, 1,2-pentamethylenediisocyanate, 1,3-pentamethylenediisocyanate, 1,4-pentamethylenediisocyanate, 1,5-pentamethylenediisocyanate, 2,3-pentamethylenediisocyanate, 2,4-pentamethylenediisocyanate, and a mixture thereof. Preferably, 1,5-pentamethylenediisocyanate is used.

In the following, in the present invention, pentamethylenediisocyanate (hereinafter may be referred to as PDI) is 1,5-pentamethylenediisocyanate unless otherwise noted.

The pentamethylenediisocyanate is not particularly limited, and for example, it can be produced in accordance with Example 1 of DESCRIPTION of WO 2012/121291.

The uretdione bimolecular-product of pentamethylenediisocyanate is, to be specific, a compound (pentamethylenediisocyanate bimolecular-product having one uretdione ring) in which two isocyanate groups of one end of two pentamethylenediisocyanates form one uretdione ring, and the other two isocyanate groups remain.

The uretdione bimolecular-product of pentamethylenediisocyanate is included in the uretdione derivative of pentamethylenediisocyanate.

The uretdione derivative of pentamethylenediisocyanate includes, for example, uretdione multimolecular-products such as the above-described uretdione bimolecular-product, uretdione trimolecular-product (to be specific, pentamethylenediisocyanate trimolecular-product having two uretdione rings),···,and uretdione n-molecular-product (to be specific, pentamethylenediisocyanate n-molecular-product having (n-1) uretdione ring)), and preferably consists of the uretdione multimolecular-product.

The uretdione derivative of pentamethylenediisocyanate is contained in an amount of, relative to a total amount of the polyisocyanate component, for example, 20 mass% or more, preferably 25 mass% or more, more preferably 50 mass% or more, even more preferably 70 mass% or more, even more preferably 80 mass% or more, particularly preferably 90 mass% or more, and for example, 100 mass% or less, preferably 95 mass% or less.

When the uretdione derivative of pentamethylenediisocyanate is contained within the above-described range, polyurethane foam with excellent soft touch and mechanical properties can be produced.

Such a uretdione derivative of pentamethylenediisocyanate can be produced by subjecting pentamethylenediisocyanate to uretdione-formation reaction.

To be specific, inactive gas such as nitrogen is introduced into a liquid phase (reaction liquid) of pentamethylenediisocyanate to allow pentamethylenediisocyanate to be in an inactive gas atmosphere, and thereafter, pentamethylenediisocyanate is subjected to uretdione-formation reaction.

In the present invention, the reaction conditions for production of uretdione derivative of pentamethylenediisocyanate are as follows: for example, under atmosphere of inactive gas such as nitrogen gas and normal pressure (atmospheric pressure), reaction temperature of, for example, 100°C or more, preferably 130°C or more, and for example, 200°C or less, preferably 170°C or less, and the reaction time of, for example, 0.5 hours or more, preferably 0.8 hours or more, and for example, 20 hours or less, preferably 15 hours or less.

The reaction liquid under inactive gas atmosphere at the time of uretdione-formation reaction has a dissolved oxygen concentration of, for example, 0.5 mass ppm or more, preferably 0.8 mass ppm or more, and for example, 10 mass ppm or less, preferably 5 mass ppm or less.

In the above-described reaction for producing the uretdione derivative of pentamethylenediisocyanate, as necessary, a known uretdione-formation catalyst and/or known reaction solvent can be blended.

Examples of the uretdione-formation catalyst include trivalent phosphorus compounds such as triethylphosphine, tri-n-propylphosphine, triisopropylphosphine, tri-n-butylphosphine, triisobutylphosphine, tritertiarybutylphosphine, tri-n-hexylphosphine, tricyclohexylphosphine, tri-n-octylphosphine, tribenzylphosphine, and benzyldimethylphosphine, and Lewis acids such as boron trifluoride and zinc trichloride.

The uretdione-formation catalyst can be used singly, or can be used in combination of two or more.

When the uretdione-formation catalyst is blended, the catalyst is blended in an amount relative to pentamethylenediisocyanate of, for example, 1 mass ppm or more, preferably 10 mass ppm or more, generally 1000 mass ppm or less, preferably 500 mass ppm or less.

When the uretdione-formation catalyst is blended, reaction is performed at generally 40°C or more, preferably 60°C or more, and generally 120°C or less, preferably 100°C or less.

After the completion of the uretdione-formation reaction, from the produced reaction mixture of uretdione derivative of pentamethylenediisocyanate, unreacted pentamethylenediisocyanate monomer (when reaction solvent and/or catalyst is blended, including reaction solvent and/or catalyst) is removed by a known method such as, for example, distillation such as thin film distillation (Smith distillation), or extraction.

After removing the unreacted pentamethylenediisocyanate monomer, the uretdione derivative of pentamethylenediisocyanate has a monomer concentration relative to a total amount of the uretdione derivative of pentamethylenediisocyanate of, generally 0.1 mass% or more, and for example, 1.0 mass% or less, preferably 0.5 mass% or less.

The uretdione derivative of pentamethylenediisocyanate has an isocyanate group concentration (isocyanate group content)(measured in accordance with Examples to be described later) of, relative to a total amount of the uretdione derivative of pentamethylenediisocyanate, for example, 20 mass% or more, preferably 25 mass% or more, and for example, 35 mass% or less, preferably 30 mass% or less, more preferably, 27 mass% or less.

The uretdione derivative of pentamethylenediisocyanate has a viscosity at 25°C (measured in accordance with Examples to be described later) of, for example, 10 mPa·s or more, preferably 20 mPa·s or more, more preferably 23 mPa·s or more, and for example, 1000 mPa·s or less, preferably 100 mPa·s or less, more preferably, 50 mPa·s or less, even more preferably 25 mPa·s or less.

In the present invention, the content of uretdione bimolecular-product of pentamethylenediisocyanate relative to a total amount of the uretdione derivative of pentamethylenediisocyanate is, for example, 10 mass% or more, preferably 50 mass% or more, more preferably 70 mass% or more, even more preferably 80 mass% or more, and for example, 98 mass% or less, preferably 95 mass% or less.

When the content of uretdione bimolecular-product of pentamethylenediisocyanate is within the above-described range, non-yellowing flexible polyurethane foam with excellent soft touch and mechanical properties can be produced.

In the reaction for producing the above-described uretdione derivative of pentamethylenediisocyanate, to achieve a high content of uretdione bimolecular-product of pentamethylenediisocyanate as described above relative to uretdione derivative of pentamethylenediisocyanate, reaction time is shortened to suppress production of multimolecular-product higher than the above-described uretdione trimolecular-product of pentamethylenediisocyanate. The specific reaction time is, for example, 0.5 hours or more, preferably 0.8 hours or more, and for example, 5 hours or less, preferably 2 hours or less, more preferably 1.5 hours or less.

The content of uretdione bimolecular-product of pentamethylenediisocyanate relative to a total amount of the uretdione derivative of pentamethylenediisocyanate can be determined by gel permeation chromatography (GPC) in accordance with Examples to be described later.

To be specific, in a chromatogram of the uretdione derivative of pentamethylenediisocyanate in gel permeation chromatograph measurement, the ratio of the peak area having a peak top between 280 to 380, preferably 290 to 330 of polyethyleneoxide-based molecular weight relative to a total peak area (in the following, referred to as bimolecular-product area ratio) corresponds to the content of uretdione bimolecular-product of pentamethylenediisocyanate.

That is, the ratio of the bimolecular-product area can be calculated by measuring the molecular weight distribution of uretdione derivative of pentamethylenediisocyanate with gel permeation chromatograph (GPC) equipped with refractive index detector (RID) in accordance with Examples to be described later, as a ratio of the peak area in the chromatogram (chart).

The content of uretdione bimolecular-product of pentamethylenediisocyanate relative to a total amount of the polyisocyanate component is 10 mass% or more, preferably 20 mass% or more, more preferably 40 mass% or more, even more preferably 50 mass% or more, even more preferably 70 mass% or more, particularly preferably 80 parts by mass or more, and 95 mass% or less, preferably 90 mass% or less, more preferably 85 mass% or less.

When the content of uretdione bimolecular-product of pentamethylenediisocyanate is the above-described upper limit or less, non-yellowing characteristics of the produced non-yellowing flexible polyurethane foam can be improved.

When the content of uretdione bimolecular-product of pentamethylenediisocyanate is within the above-described range, mechanical properties (in particular, elongation at break) of the produced non-yellowing flexible polyurethane foam can be improved.

In view of softness in touch of the produced non-yellowing flexible polyurethane foam, the content of uretdione bimolecular-product of pentamethylenediisocyanate relative to a total amount of the polyisocyanate component is, for example, 70 mass% or more, preferably 80 mass% or more, and for example, 95 mass% or less, preferably 90 mass% or less.

In view of tear strength of the produced non-yellowing flexible polyurethane foam, the content of uretdione bimolecular-product of pentamethylenediisocyanate relative to a total amount of the polyisocyanate component is, for example, 30 mass% or more, preferably 40 mass% or more, for example, 70 mass% or less, preferably 60 mass% or less. This is because tear strength improves when the produced non-yellowing flexible polyurethane foam has a predetermined hardness. When the polyisocyanate component contains an allophanate derivative, the produced non-yellowing flexible polyurethane foam becomes soft, and therefore in view of tear strength of the non-yellowing flexible polyurethane foam, it is better that the polyisocyanate component has a low allophanate derivative content.

The content of uretdione bimolecular-product of pentamethylenediisocyanate relative to a total amount of the polyisocyanate component can be determined by, for example, multiplying the content of uretdione bimolecular-product of pentamethylenediisocyanate relative to a total amount of the uretdione derivative of pentamethylenediisocyanate by the content of uretdione derivative of pentamethylenediisocyanate relative to a total amount of the polyisocyanate component.

The polyisocyanate component contains preferably trimer derivative of aliphatic polyisocyanate, more preferably, the polyisocyanate component consists of uretdione derivative of pentamethylenediisocyanate and trimer derivative of aliphatic polyisocyanate.

Containing the uretdione derivative of pentamethylenediisocyanate and the trimer derivative of aliphatic polyisocyanate allows for improvement in light resistance.

Examples of the aliphatic polyisocyanate include aliphatic diisocyanates such as trimethylenediisocyanate, 1,2-propylenediisocyanate, butylenediisocyanate (tetramethylenediisocyanate, 1,2-butylenediisocyanate, 2,3-butylenediisocyanate, 1,3-butylenediisocyanate), pentamethylenediisocyanate (PDI, for example, 1,5-pentamethylenediisocyanate, etc), hexamethylenediisocyanate (HDI, for example, 1,6-hexamethylenediisocyanate, etc), 2,4,4- or 2,2,4-trimethylhexamethylenediisocyanate, and 2,6-diisocyanatemethyl caproate.

These aliphatic polyisocyanates can be used singly, or can be used in combination of two or more.

For the aliphatic polyisocyanate, preferably, pentamethylenediisocyanate, hexamethylenediisocyanate, more preferably, pentamethylenediisocyanate is used.

The trimer derivative of aliphatic polyisocyanate includes aliphatic polyisocyanate trimer or aliphatic polyisocyanate allophanate trimer (including aliphatic polyisocyanate trimer and aliphatic allophanate derivative, preferably consists of aliphatic polyisocyanate trimer and aliphatic allophanate derivative), and consists of aliphatic polyisocyanate trimer or consists of aliphatic polyisocyanate allophanate trimer.

Examples of the aliphatic polyisocyanate trimer include the above-described isocyanurate derivative and iminooxadiazinedione derivative of aliphatic polyisocyanate, and preferably isocyanurate derivative of aliphatic polyisocyanate is used.

The aliphatic polyisocyanate trimer is produced by subjecting an aliphatic polyisocyanate to trimerization reaction in the presence of a trimerization catalyst.

The trimerization catalyst is not particularly limited as long as it is a catalyst effective for trimerization, and examples thereof include hydroxide of tetraalkylammonium such as tetramethylammonium, tetraethylammonium, tetrabutylammonium, trimethylbenzylammonium, and tributylbenzylammonium or their organic salt of weak acid; hydroxide of trialkylhydroxyalkylammonium such as trimethylhydroxypropylammonium (also called: N-(2-hydroxypropyl)-N,N,N-trimethylammonium), trimethylhydroxyethylammonium, triethylhydroxypropylammonium, and triethylhydroxyethylammonium or their organic salt of weak acid (for example, N-(2-hydroxypropyl)-N,N,N-trimethylammonium-2-ethylhexanoate, etc); metal salt (for example, alkali metal salt, magnesium salt, tin salt, zinc salt, lead salt, etc) of alkylcarboxylic acid such as acetic acid, caproic acid, octylic acid, myristic acid, and naphthenic acid; metal chelate compounds of $\beta$-diketone such as aluminum acetylacetone and lithium acetylacetone; Friedel-Crafts catalysts such as aluminum chloride and boron trifluoride; various organic metal compounds such as titaniumtetrabutyrate and tributylantimonyoxide; and aminosilyl group-containing compounds such as hexamethylsilazane.

These trimerization catalysts can be used singly, or can be used in combination of two or more.

For the trimerization catalyst, preferably, organic salt of weak acid of trialkylhydroxyalkylammonium is used, more preferably, N-(2-hydroxypropyl)-N,N,N-trimethylammonium-2-ethylhexanoate is used.

The trimerization catalyst (based on active component 100%) is blended in an amount relative to 100 parts by mass of aliphatic polyisocyanate of, for example, 0.005 parts by mass or more, and for example, 0.1 parts by mass or less, preferably 0.05 parts by mass or less.

In this method, trimerization reaction is caused by blending a trimerization catalyst with an aliphatic polyisocyanate at the above-described amount, and heating the mixture.

In the trimerization reaction, reaction conditions are as follows: for example, under atmosphere of inactive gas such as nitrogen gas and normal pressure (atmospheric pressure), reaction temperature of, for example, 50°C or more, preferably 70°C or more, for example, 100°C or less, preferably 90°C or less. The reaction time is, for example, 10 minutes or more, preferably 20 minutes or more, and for example, 120 minutes or less, preferably 60 minutes or less.

In the above-described trimerization reaction, to adjust trimerization, for example, organic phosphite such as the one described in Japanese Unexamined Patent Publication No.Sho 61-129173 can be blended as a promoter.

Examples of the organic phosphite include organic phosphorous acid diester and organic phosphorous acid triester, and to be specific, for example, monophosphites such as triethylphosphite, tributylphosphite, tris (tridecyl) phosphite, triphenylphosphite, tris (nonylphenyl) phosphite, tris (2, 4-di-t-butylphenyl) phosphite, and diphenyl (tridecyl) phosphite; and di, tri, or tetraphosphites derived from polyhydric alcohol such as distearyl penta erythrityl diphosphite, tripentaerythritol triphosphite, and tetraphenyl dipropylene glycol diphosphite.

These organic phosphites can be used singly, or can be used in combination of two or more.

For the organic phosphite, preferably, monophosphites are used, more preferably, tris (tridecyl) phosphite is used.

The organic phosphite is blended in an amount of, relative to 100 parts by mass of aliphatic polyisocyanate, for example, 0.01 parts by mass or more, preferably 0.05 parts by mass or more, and for example, 1.0 part by mass or less, preferably 0.1 parts by mass or less.

In the above-described trimerization reaction, as necessary, a hindered phenol antioxidant, and for example, a trimerization reaction stabilizer such as 2,6-di-(tert-butyl)-4-methylphenol, IRGANOX 1010, IRGANOX 1076, IRGANOX 1135, and IRGANOX 245 (all manufactured by BASF Japan, trade name) can be blended.

The trimerization reaction stabilizer is blended in an amount relative to 100 parts by mass of aliphatic polyisocyanate of, for example, 0.01 parts by mass or more, preferably 0.05 parts by mass or more, and for example, 1.0 part by mass or less, preferably 0.1 parts by mass or less.

In the above-described trimerization reaction, as necessary, a known reaction solvent can be blended. Then, at the time when the isocyanate group conversion rate (reaction rate of the isocyanate group relative to a total amount of the isocyanate group and urethane group in the case when the isocyanate group and urethane group of the aliphatic polyisocyanate go through reaction and are converted to uretdione group, allophanate group (described later) and isocyanurate group) reaches a predetermined ratio to be described later, a reaction terminator such as, for example, phosphoric acid, monochloroacetic acid, benzoyl chloride, dodecylbenzenesulfonic acid, toluenesulfonic acid (orthotoluenesulfonic acid, p-toluenesulfonic acid) and derivatives thereof (for example, o- or p-toluenesulfonic acid methyl, etc), and toluenesulfonamide (o- or p-toluenesulfonamide) is added to the reaction mixture to deactivate the catalyst to terminate the reaction. In this case, reaction can also be terminated by adding an adsorbent that adsorbs catalysts such as chelate resin and ion-exchange resin.

The isocyanate group conversion rate relative to a total amount of trimer derivative of aliphatic polyisocyanate is, for example, 5 mass% or more, and for example, 35 mass% or less, preferably 20 mass% or less.

When the isocyanate group conversion rate is more than the above-described range, the number average molecular weight of the produced aliphatic polyisocyanate trimer becomes high, which may reduce solubility, compatibility, and isocyanate group concentration, and may increase viscosity. The isocyanate group conversion rate can be measured by, for example, a method using a GPC device, NMR method, and titrimetry.

After completion of the trimerization reaction, from the reaction mixture of the produced aliphatic polyisocyanate trimer and the aliphatic polyisocyanate monomer, unreacted aliphatic polyisocyanate monomer (when reaction solvent and/or catalyst inactivator is blended, including the reaction solvent and/or catalyst inactivator) is removed by a known method such as, for example, distillation such as thin-film distillation (Smith distillation), and extraction.

After removal of the unreacted aliphatic polyisocyanate monomer, the above-described reaction terminator can be added as a stabilizer to the aliphatic polyisocyanate trimer in an arbitrary amount.

The trimer derivative of aliphatic polyisocyanate after removal of unreacted pentamethylenediisocyanate monomer has a monomer concentration of, relative to a total amount of the trimer derivative of aliphatic polyisocyanate, generally 0.1 mass% or more, and for example, 1.0 mass% or less, preferably 0.6 mass% or less.

At the time of the above-described trimerization reaction, alcohol can be blended to obtain the aliphatic polyisocyanate allophanate trimer.

That is, for the method for producing the aliphatic polyisocyanate allophanate trimer, for example, the aliphatic polyisocyanate is allowed to react with alcohol, and then, as described above, trimerization reaction is performed in the presence of a trimerization catalyst. After the trimerization reaction, unreacted aliphatic polyisocyanate monomer is removed.

Examples of the alcohol include, for example, monohydric alcohol, dihydric alcohol, trihydric alcohol, and alcohol with four or more hydroxyl groups.

Examples of the monohydric alcohol include straight chain monohydric alcohol and branched monohydric alcohol.

Examples of the straight chain monohydric alcohol include C (number of carbon, the same applies in the following) 1 to 20 straight chain monohydric alcohol such as methanol, ethanol, n-propanol, n-butanol, n-pentanol, n-hexanol, n-heptanol, n-octanol, n-nonanol, n-decanol, n-undecanol, n-dodecanol (laurylalcohol), n-tridecanol, n-tetradecanol, n-pentadecanol, n-hexadecanol, n-heptadecanol, n-octadecanol (stearyl alcohol), n-nonadecanol, and eicosanol.

Examples of the branched monohydric alcohol include C3 to 20 branched monohydric alcohols such as isopropanol, isobutanol (isobutylalcohol), sec-butanol, tert-butanol, isopentanol, isohexanol, isoheptanol, isooctanol, 2-ethylhexane-1-ol, isononanol, isodecanol, 5-ethyl-2-nonanol, trimethylnonylalcohol, 2-hexyldecanol, 3, 9-diethyl-6-tridecanol, 2-isoheptyl isoundecanol, 2-octyldodecanol, and other branched alkanol (C5 to 20).

Examples of the dihydric alcohol include C2 to 20 dihydric alcohols such as straight chain dihydric alcohol including ethylene glycol, 1,3-propanediol, 1,4-butanediol (1,4-butyleneglycol), 1,5-pentanediol, 1,6-hexanediol, 1,4-dihydroxy-2-butene, diethylene glycol, triethylene glycol, dipropylene glycol, and other straight chain alkane (C7 to 20) diols; branched dihydric alcohols including 1,2-propanediol, 1,3-butanediol (1,3-butyleneglycol), 1,2-butanediol (1,2-butyleneglycol), neopentyl glycol, 3-methyl-1,5-pentanediol, 2,2,2-trimethylpentanediol, 3,3-dimethylolheptane, 2,6-dimethyl-1-octene-3,8-diol, and other branched alkane (C7 to 20) diols; 1,3-or 1,4-cyclohexanedimethanol and a mixture thereof, 1,3- or 1,4-cyclohexanediol and a mixture thereof, hydrogenated bisphenol A, and bisphenol A.

Examples of the trihydric alcohol include glycerin and trimethylolpropane.

Examples of alcohols with four or more hydroxyl groups include tetramethylolmethane, D-sorbitol, xylitol, and D-mannitol.

These alcohols can be used singly, or can be used in combination of two or more.

Examples of alcohol include preferably monohydric alcohols and dihydric alcohols, more preferably, C1 to 20 straight chain monohydric alcohol and C3 to 20 branched monohydric alcohol. Even more preferably, C3 to 20 branched monohydric alcohol is used, particularly preferably, isobutylalcohol is used.

Alcohol is blended so that the aliphatic polyisocyanate allophanate trimer has an average functionality of 2 or more, and is blended in an amount relative to 100 parts by mass of aliphatic polyisocyanate of, for example, 0.05 parts by mass or more, preferably 0.10 parts by mass or more, more preferably, 1.00 part by mass or more, even more preferably 1.50 parts by mass or more, particularly preferably, 1.90 parts by mass or more, and for example, 3.00 parts by mass or less, preferably 2.00 parts by mass or less.

When the alcohol is blended within the above-described range, non-yellowing flexible polyurethane foam with excellent mechanical properties (in particular, elongation at break) can be produced.

In this reaction, the aliphatic polyisocyanate is blended with alcohol so that the equivalent ratio (NCO/OH) of the isocyanate group of the aliphatic polyisocyanate relative to the hydroxy group of alcohol is, for example, 30 or more, preferably 60 or more, more preferably, 1000 or more, generally 2000 or less.

In this reaction, to the extent that the excellent effects of the present invention are not hindered, as necessary, the above-described alcohol can be used in combination with an active hydrogen group-containing compound such as, for example, thiols, oximes, lactams, phenols, and βdiketones.

Reaction between aliphatic polyisocyanate and alcohol is first urethane-forming reaction, and at the time of trimerization reaction thereafter, the reaction is allophanate-formation. The urethane-forming reaction conditions are as follows: for example, under atmosphere of inactive gas such as nitrogen gas and normal pressure (atmospheric pressure), reaction temperature of, for example, room temperature (for example, 25°C) or more, preferably 40°C or more, and for example, 100°C or less, preferably 90°C or less. The reaction time is, for example, 0.5 hours or more, preferably 1 hour or more, and for example, 10 hours or less, preferably 6 hours or less, more preferably 3 hours or less.

In the above-described urethane-forming reaction, the above-described promoter and the above-described trimerization reaction stabilizer can be added in advance.

The reaction conditions for the allophanate-formation reaction at the time of the above-described trimerization reaction are the same as the reaction conditions for the above-described trimerization reaction.

When the above-described aliphatic polyisocyanate is pentamethylenediisocyanate, at the time of the above-described trimerization reaction, the uretdione derivative of pentamethylenediisocyanate and the trimer derivative of pentamethylenediisocyanate can be produced at the same time.

To produce the uretdione derivative of pentamethylenediisocyanate and the trimer derivative of pentamethylenediisocyanate at the same time, pentamethylenediisocyanate is subjected to isocyanurate-formation reaction and uretdione-formation reaction, and for example, the methods are as follows: pentamethylenediisocyanate is subjected to the isocyanurate-formation reaction and the uretdione-formation reaction stepwise, or the isocyanurate-formation reaction and the uretdione-formation reaction of pentamethylenediisocyanate are simultaneously progressed.

In the method in which pentamethylenediisocyanate is subjected to the isocyanurate-formation reaction and the uretdione-formation reaction stepwise, for example, pentamethylenediisocyanate is first subjected to the isocyanurate-formation reaction, and thereafter subjected to the uretdione-formation reaction.

To cause the isocyanurate-formation reaction, the above-described trimerization reaction can be performed. But by allowing it to go through the urethane-forming reaction, the isocyanurate ring can be formed easily, and therefore preferably, alcohol is blended, to first subject pentamethylenediisocyanate and alcohol to the urethane-forming reaction.

Examples of the alcohol include the above-described alcohol.

In this reaction, alcohol is blended, and therefore as described above, except for the case where an allophanate trimer is produced, a small amount of allophanate derivative is by-produced relative to the isocyanurate derivative, and may remain.

When the allophanate trimer is not produced, alcohol is blended in an amount relative to 100 parts by mass of pentamethylenediisocyanate of, for example, 0.01 parts by mass or more, preferably 0.05 parts by mass or more, and for example, 1.0 part by mass or less, preferably 0.8 parts by mass or less.

The urethane-forming reaction conditions are, for example, the above-described urethane-forming reaction conditions.

In this manner, pentamethylenediisocyanate that went through urethane-formation can be produced.

To cause the isocyanurate-formation reaction, next, the pentamethylenediisocyanate that went through urethane-formation, and pentamethylenediisocyanate are subjected to the isocyanurate ring-formation reaction in the presence of the above-described trimerization catalyst for accelerating the isocyanurate formation.

The isocyanurate-formation catalyst (based on active component 100%) is blended in an amount of, for example, the amount for the above-described trimerization catalyst.

In the isocyanurate ring-formation reaction, reaction conditions are, for example, the reaction conditions for the above-described trimerization reaction.

In the isocyanurate ring-formation reaction, in the same manner as in the above-described trimerization reaction, when the isocyanate group conversion rate reaches the above-described predetermined rate, the above-described reaction terminator is added to the reaction liquid, to deactivate the catalyst to terminate the reaction.

In this manner, pentamethylenediisocyanate is subjected to the isocyanurate-formation reaction.

Thereafter, the reaction liquid produced by the isocyanurate-formation reaction is subjected to heat treatment, thereby causing uretdione-formation reaction.

The heat treatment conditions are the same as the above-described uretdione-formation reaction, and to be specific, the heat treatment temperature is, for example, 100°C to 200°C, preferably 150°C to 170°C, and the heat treatment time is 0.5 hours to 5 hours, 1 hour to 3 hours.

In this manner, uretdione-formation reaction can be caused, and as a result, pentamethylenediisocyanate can be subjected to the isocyanurate-formation reaction and the uretdione-formation reaction stepwise.

Pentamethylenediisocyanate can be subjected to the isocyanurate-formation reaction and the uretdione-formation reaction simultaneously by, for example, in the same manner as in the above, first subjecting pentamethylenediisocyanate and alcohol to urethane-forming reaction.

In this reaction, the alcohol to be blended is, for example, the above-described alcohol.

To allow the isocyanurate-formation reaction and the uretdione-formation reaction to progress simultaneously, then, in the presence of a derivative-formation catalyst that works as both the uretdione-formation catalyst and the isocyanurate-formation catalyst, pentamethylenediisocyanate that went through urethane-forming reaction, and pentamethylenediisocyanate are subjected to isocyanurate ring-formation reaction, and at the same time, pentamethylenediisocyanate is subjected to uretdione-formation reaction.

Examples of the derivative-formation catalyst that works as both the uretdione-formation catalyst and the isocyanurate-formation catalyst include the above-described trivalent phosphorus compound, and preferably, tri-n-butylphosphine is used.

These derivative-formation catalysts that work as both the uretdione-formation catalyst and the isocyanurate-formation catalyst accelerate isocyanurate formation, and accelerate uretdione formation. It may accelerate iminooxadiazinedione formation as well.

The derivative-formation catalyst that works as both the uretdione-formation catalyst and the isocyanurate-formation catalyst is blended in an amount of, for example, relative to 100 parts by mass of pentamethylenediisocyanate, for example, 0.05 parts by mass or more, preferably 0.1 parts by mass or more, and for example, 1.0 part by mass or less, preferably 0.5 parts by mass or less.

To simultaneously allow the isocyanurate-formation reaction and uretdione-formation reaction to progress, the reaction conditions are as follows: for example, under atmosphere of inactive gas such as nitrogen gas and normal pressure (atmospheric pressure), reaction temperature of, for example, 25°C or more, preferably 40°C or more, more preferably 60°C or more, and for example, 100°C or less, preferably 70°C or less. The reaction time is, for example, 1 hour or more, preferably 2 hours or more, and for example, 8 hours or less, preferably 4 hours or less.

In the isocyanurate ring-formation reaction and uretdione-formation reaction, in the same manner as in the above-described trimerization reaction, when the isocyanate group conversion rate reaches a predetermined ratio (for example, 5 mass% or more, for example, 40 mass% or less, preferably 35 mass% or less relative to a total amount of the uretdione derivative and trimer derivative of pentamethylenediisocyanate), the above-described reaction terminator is added to the reaction liquid to deactivate the catalyst and terminate the reaction.

In this manner, the isocyanurate-formation reaction and uretdione-formation reaction of pentamethylenediisocyanate can be simultaneously progressed.

Thereafter, the above-described isocyanurate-formation catalyst and/or known allophanate-formation catalyst is added, and by allowing to stand at for example, 80 to 120°C, for example, for 1 to 10 hours, the trimer derivative and/or allophanate derivative contents in the reaction mixture can also be increased.

The obtained aliphatic polyisocyanate allophanate trimer contains the isocyanurate group and allophanate group.

In the aliphatic polyisocyanate allophanate trimer, the allophanate group content (mole ratio of allophanate group/isocyanurate group) relative to 1 mol of the isocyanurate group is, for example, 0.01 or more, preferably 0.05 or more, more preferably, 0.10 or more, even more preferably 0.50 or more, 2.00 or less, preferably 0.90 or less, more preferably, 0.60 or less.

When the content of aliphatic polyisocyanate allophanate group is within the above-described range, mechanical properties (in particular, elongation at break) of the produced non-yellowing flexible polyurethane foam can be further improved.

The allophanate group content relative to the isocyanurate group content can be calculated by $^1$H-NMR measurement.

To be specific, in $^1$H-NMR measurement (400MHz, solvent: $D^6$-DMSO (solute: 5 mass%), standard substance: tetramethylsilane) of the trimer derivative of aliphatic polyisocyanate, the peak at 8.3 to 8.7 ppm is assigned to the peak of the proton of the allophanate group (NH group in allophanate group) of the aliphatic polyisocyanate, and the peak at 3.8 ppm is assigned to the proton of the isocyanurate group (methylene group ($CH_2$ group) directly connected to isocyanurate group) of aliphatic polyisocyanate. Then, based on the formula below, the peak area ratio (integration ratio) is calculated as the allophanate group content relative to the isocyanurate group content.

Allophanate group content relative to isocyanurate group content = integrated value for assigned peak of proton of allophanate group /(integrated value for assigned peak of proton of isocyanurate group/6)

The trimer derivative of aliphatic polyisocyanate has a chlorine concentration relative to a total amount of the trimer derivative of aliphatic polyisocyanate of, for example, 10 mass ppm or more, preferably 50 mass ppm or more, and for example, 60 mass ppm or more, for example, 100 ppm or less.

The trimer derivative of aliphatic polyisocyanate has an isocyanate group concentration relative to a total amount of the trimer derivative of aliphatic polyisocyanate of, for example, 20 mass% or more, preferably 22 mass% or more, more preferably, 23.5 mass% or more, and for example, 30 mass% or less, preferably 25 mass% or less, more preferably, 24 mass% or less.

The trimer derivative of aliphatic polyisocyanate has a viscosity at 25°C (measured in accordance with Examples to be described later) of, for example, 100 mPa·s or more, preferably 500 mPa·s or more, and for example, 5000 mPa·s or less, preferably 2000 mPa·s or less, more preferably, 1800 mPa·s or less, even more preferably 1200 mPa·s or less.

The content of trimer derivative of aliphatic polyisocyanate relative to the polyisocyanate component is, for example, 0 mass% or more, preferably 5 mass% or more, and for example, 80 mass% or less, preferably 75 mass% or less, more preferably, 50 mass% or less, even more preferably 20 mass% or less, particularly preferably, 10 mass% or less.

These polyisocyanate components can be used singly, or can be used in combination of two or more.

The polyisocyanate component has an average functionality of the isocyanate group of, for example, 1.5 or more, preferably 1.9 or more, and for example, 3.0 or less, preferably 2.5 or less.

The polyisocyanate component has a viscosity at 25°C (measured in accordance with Examples to be described later) of, for example, 20 mPa·s or more, preferably 25 mPa·s or more, more preferably 30 mPa·s or more, even more preferably 35 mPa·s or more, particularly preferably, 40 mPa·s or more, and for example, 2000 mPa·s or less, preferably 1000 mPa·s or less, more preferably, 800 mPa·s or less, even more preferably 500 mPa·s or less, even more preferably 300 mPa·s or less, even more preferably 100 mPa·s or less, particularly preferably, 50 mPa·s or less.

When the isocyanate component has a viscosity within the above-described range, softness of the produced non-yellowing flexible polyurethane foam can be improved.

In the polyisocyanate component, the allophanate group content relative to 1 mol of the isocyanurate group is, for example, 0.01 mol or more, preferably 0.05 mol or more, more preferably, 0.10 mol or more, even more preferably 0.50 mol or more, and for example, 2.00 mol or less, preferably 0.90 mol or less, more preferably 0.60 mol or less.

When the allophanate group content relative to the isocyanurate group in the polyisocyanate component is within the above-described range, mechanical properties (in particular, elongation at break) of the produced non-yellowing flexible polyurethane foam can be further improved.

The polyol component includes a compound having two or more hydroxyl groups in its molecule, and preferably consists of a compound having two or more hydroxyl groups in its molecule.

The compound having two or more hydroxyl groups in its molecule is not particularly limited, and examples thereof include macropolyol having a number average molecular weight (Mn) of 200 to 10000, preferably 400 to 5000.

Examples of the macropolyol include, for example, polyetherpolyol, polyesterpolyol, polyetherpolyesterpolyol, and polyesterpolyurethane polyol, and preferably polyetherpolyol is used.

Polyetherpolyol can be produced by, for example, subjecting alkylene oxide to addition polymerization using water, alcohols, amines, and ammonia as an initiator.

Examples of alcohols as the initiator include monohydric or polyhydric (2 to 8 hydroxy groups) aliphatic alcohols including monohydric aliphatic alcohols such as methanol and ethanol; dihydric aliphatic alcohols such as ethylene glycol and propylene glycol; trihydric aliphatic alcohols such as glycerin and trimethylolpropane; quadhydric aliphatic alcohols such as pentaerythritol; hexahydric aliphatic alcohols such as sorbitol; octahydric aliphatic alcohols such as sucrose.

Examples of the amines as the initiator include monofunctional or polyfunctional aliphatic amines including monofunctional aliphatic amines such as dimethylamine and diethylamine; difunctional aliphatic amines such as methylamine and ethylamine: trifunctional aliphatic amines such as monoethanolamine, diethanolamine, and triethanolamine; tetrafunctional aliphatic amines such as ethylenediamine; pentafunctional aliphatic amines such as diethylenetriamine; or aromatic amines such as toluylenediamine.

For the initiator, preferably, dihydric aliphatic alcohols and trihydric aliphatic alcohols, and more preferably, trihydric aliphatic alcohols are used.

For the alkylene oxide, for example, ethyleneoxide, propyleneoxide, 1,2-, 1,3-, 1,4- and 2,3-butyleneoxide and a combination of two or more of these is used. Of these examples, preferably propyleneoxide and/or ethyleneoxide are used. When these are used in combination, any addition formation of block polymerization and random polymerization can be suitably used.

The polyol component has a hydroxyl number (OH value) of, for example, 5 mgKOH/g or more, preferably 50 mgKOH/g or more, 100 mgKOH/g or more, and for example, 500 mgKOH/g or less, preferably 300 mgKOH/g or less, more preferably, 250 mgKOH/g or less, and has an average functionality of, for example, 1.5 or more, preferably 2.0 or more, and for example, 8.0 or less, preferably 4.0 or less.

The hydroxyl number of the polyol component is measured in accordance with the description of JIS K 1557-1 (2007), and the average functionality of the polyol component is calculated from the amount charged based on the formulation.

For the polyol component, for example, a plurality of types of polyol component having any one of the difference in the following can be used at an arbitrary ratio in accordance with its purpose and use: for example, a different number average molecular weight, initiator types, hydroxyl number, average functionality, alkylene oxide types or addition types.

To be specific, for example, a polyol component having a number average molecular weight of 400 or more and 1000 or less can be used in combination with a polyol component having a number average molecular weight of more than 1000 and 5000 or less, preferably 2000 or less, and the polyol component having a number average molecular weight of 1000 or less is blended in an amount relative to their total of, for example, 10 mass% or more, preferably 20 mass% or more, and for example, 50 mass% or less, preferably 40 mass% or less, and the polyol component having a number average molecular weight of more than 1000 is blended in an amount relative to their total of, for example, 50 mass% or more, preferably 60 mass% or more, and for example, 90 mass% or less, preferably 80 mass% or less.

For example, a polyol component having a hydroxyl number of 5 mgKOH/g or more and 200 mgKOH/g or less can be used in combination with a polyol component having a hydroxyl number of more than 200 mgKOH/g and 500 mgKOH/g or less, and the polyol component having a hydroxyl number of 200 mgKOH/g or less is blended in an amount of, relative to their total, for example, 50 mass% or more, preferably 60 mass% or more, and for example, 90 mass% or less, preferably 80 mass% or less, and the polyol component having a hydroxyl number of more than 200 mgKOH/g is blended in an amount of, for example, 10 mass% or more, preferably 20 mass% or more, for example, 50 mass% or less, preferably 40 mass% or less.

The catalyst is not particularly limited, and a known urethane-forming catalyst can be used. To be specific, amines and organic metal compounds are used.

Examples of the amine include tertiary amines such as triethylamine, triethylenediamine, bis-(2-dimethylaminoethyl) ether, and N-methylmorpholine; quaternary ammonium salts such as tetraethyl hydroxyl ammonium; and imidazoles such as imidazole and 2-ethyl-4-methylimidazole. These amines can be used singly, or can be used in combination of two or more.

These amines can be obtained as a commercially available product, and examples thereof include KAOLIZER No.31 (manufactured by Kao Corporation), KAOLIZER No. 120 (manufactured by Kao Corporation), KAOLIZER No. 12 (manufactured by Kao Corporation), KAOLIZER No.25 (manufactured by Kao Corporation), DABCO 33LV (33 mass% diethylene glycol solution of triethylenediamine, manufactured by Air Products and Chemicals, Inc.), Niax A-1 (manufactured by Momentive Performance Materials Inc. (in the following, referred to as "manufactured by Momentive")), and TOYOCAT-NCE (manufactured by Tosoh Corporation).

Examples of the organic metal compound include organic tin compounds such as tin acetate, tin octylate, stannous oleate, tin laurate, dibutyltindiacetate, dimethyltindilaurate, dibutyltindilaurate, dibutyltindimercaptide, dibutyltinmaleate, dibutyltindineodecanoate, dioctyltindimercaptide, dioctyltindilaurate, and dibutyltindichloride; organic lead compounds such as lead octanoate and lead naphthenate; organic nickel compounds such as nickel naphthenate; organic cobalt compounds such as cobalt naphthenate; organic copper compounds such as copper octenate; and organic bismuth compounds such as bismuth octylate and bismuth neodecanoate. These organic metal compounds can be used singly, or can be used in combination of two or more.

These organic metal compounds can be obtained as a commercially available product, and examples thereof include NEOSTANN U-100 (organic tin compound, manufactured by Nitto Kasei Co., Ltd.), Formate TK-1 (organic tin compound, manufactured by Mitsui Chemicals, Inc), Formrez UL-28 (organic tin compound, manufactured by Momentive), and Stanoct (organic tin compound, manufactured by Mitsubishi Chemical Corporation).

These catalysts (amines and organic metal compounds) can be used singly or used in combination of two or more. Preferably, amines and organic metal compounds are used in combination.

The catalyst (based on active component amount 100%) is blended in an amount relative to 100 parts by mass of the polyol component of, for example, 0.1 parts by mass or more, preferably 0.3 parts by mass or more, more preferably, 1.0 part by mass or more, and for example, 1.5 parts by mass or less, preferably 1.2 parts by mass or less.

When the catalyst is blended within the above-described range, non-yellowing characteristics of the obtained polyurethane foam can be improved.

When amines and organic metal compounds are used in combination as the catalyst, they are blended in an amount such that the ratio of the amines relative to the organic metal compounds (amount of amines blended/amount of organic metal compounds blended, based on active component amount 100%) is, for example, 0.5 or more, preferably 0.8 or more, and for example, 1.5 or less, preferably 1.0 or less.

The blowing agent is not particularly limited, and a known blowing agent is used. Preferably, water is used.

For the blowing agent, water and a physical blowing agent (for example, hydrofluorocarbons, hydrocarbons (for example, cyclopentane, etc), carbon dioxide, liquid carbon dioxide, etc) are used in combination at a suitable ratio. For the physical blowing agent, in view of reducing environmental burden, preferably carbon dioxide, and liquid carbon dioxide are used.

These physical blowing agents can be used singly, or can be used in combination of two or more.

The blowing agent is blended in an amount of, relative to 100 parts by mass of the polyol component, for example, 0.5 parts by mass or more, preferably 1 part by mass or more, and for example, 10 parts by mass or less, preferably 7 parts by mass or less.

When the blowing agent content is within the above-described range, excellent foaming properties can be produced.

To produce the non-yellowing flexible polyurethane foam of the present invention, first, the above-described polyol component is blended with the above-described catalyst and the above-described blowing agent at the above-described blending ratio to prepare a premix (resin premix).

In preparation of the premix, as necessary, additives such as a foam stabilizer and a stabilizer can be blended, and preferably, the premix consists of the above-described polyol component, above-described catalyst, above-described blowing agent, a foam stabilizer, and a stabilizer.

The foam stabilizer is not particularly limited, and a known foam stabilizer is used. For example, a silicone foam stabilizer is used.

The foam stabilizer can be obtained as a commercially available product, and for example, DC-6070, DC-2525 (all manufactured by Air Products and Chemicals, Inc., trade name), SZ-1966, SRX-274C, SF-2969, SF-2961, SF-2962, SZ-1325, SZ-1328 (all manufactured by Dow Corning Toray Co., Ltd., trade name), L-5309, L-3601, L-5307, L-3600, L-5366, Y-10366 (all manufactured by Momentive, trade name), B-8002, B-8545, and B-8715LF2 (all manufactured by Evonic Corporation, trade name) are used.

These foam stabilizers can be used singly, or can be used in combination of two or more.

The foam stabilizer is blended in an amount of, relative to 100 parts by mass of the polyol component, for example, 0.1 parts by mass or more, preferably 0.5 parts by mass or more, and for example, 10 parts by mass or less, preferably 5 parts by mass or less.

Examples of the stabilizer include an antioxidant, ultraviolet ray absorber, heat stabilizer, and light stabilizer, and preferably antioxidant and a light stabilizer are used.

Examples of the antioxidant include hindered phenol antioxidant (for example, 4-methyl-2,6-di-tert-butylphenol (BHT), triethylene glycol-bis[3-(3-t-butyl-5-methyl-4-hydroxyphenyl) propionate], and pentaerythritoltetrakis[3-(3,5-di-t-butyl-4-hydroxyphenyl) propionate], etc), and other antioxidants (for example, antioxidant excluding hindered phenol antioxidant, such as phosphorus antioxidants including bis(2,4-dit-butylphenyl) pentaerythritoldiphosphite, tridecylphosphite, and tris (2-ethylhexyl) phosphite, and thiophene antioxidants including 2,5-thiophenediylbis(5-t-butyl-1,3-benzoxazole)) are used.

Of these antioxidants, preferably, phosphorus antioxidants are used, and more preferably, tris (2-ethylhexyl) phosphite is used. For tris (2-ethylhexyl) phosphite, a commercially available product can be used, and for example, JP-308E (manufactured by Johoku Chemical Co. Ltd., trade name) is used.

These antioxidants can be used singly, or can be used in combination of two or more.

For the ultraviolet ray absorber, for example, benzophenone, benzotriazole, triazine, and cyanoacrylate ultraviolet ray absorbers can be used.

These ultraviolet ray absorbers can be used singly, or can be used in combination of two or more.

For the heat stabilizer, for example, a compound containing a sulfonamide group is used.

For the compound containing a sulfonamide group, for example, aromatic sulfonamides and aliphatic sulfonamides are used, and preferably o-toluenesulfonamide is used.

These heat stabilizers can be used singly, or can be used in combination of two or more.

For the light stabilizer, for example, a hindered amine light stabilizer, a blend light stabilizer are used, and preferably a hindered amine light stabilizer is used. Examples of the hindered amine light stabilizer include ADK STAB LA62, ADK STAB LA67 (all manufactured by Adeka Argus Chemical Co. Ltd., trade name), and TINUVIN 765, TINUVIN 144, TINUVIN 770, and TINUVIN 622 (all manufactured by BASF Japan, trade name).

These light stabilizers can be used singly, or can be used in combination of two or more.

The stabilizer is blended in an amount of, relative to 100 parts by mass of the polyol component, for example, 0.1 parts by mass or more, preferably 0.5 parts by mass or more, and for example, 10 parts by mass or less, preferably 5 parts by mass or less.

To the premix, other than the above-described additives, as necessary, for example, known other additives such as a cross-linking agent, cell opener, pigment (coloring pigment), dye, curing accelerator, flatting agent, tackifier, and silane coupling agent can be blended at a suitable ratio to the extent that does not damage the excellent effects of the present invention.

Furthermore, as known other additives, for example, a chain extender, antiblowing agent, plasticizer, anti-blocking agent, releasing agent, lubricant, filler, and hydrolysis inhibitor can be added at a suitable ratio to the extent that does not damage excellent effects of the present invention.

Then, the premix thus produced is mixed with and allowed to react with the polyisocyanate component, and causing foaming by a known foaming methods such as for example, slab foaming, mold foaming, and spray foaming, thereby producing a non-yellowing flexible polyurethane foam of the present invention.

The reaction conditions (for example, reaction temperature, etc) for the premix and the polyisocyanate component are set suitably in accordance with purpose and use.

The reaction time (cream time (CT)) for the premix and the polyisocyanate component is measured in accordance with Examples to be described later, and for example, the cream time is 90 seconds or more, for example, 200 seconds or less, preferably 170 seconds or less, more preferably, 100 seconds or less, even more preferably 95 seconds or less.

When the reaction time (cream time (CT)) for the premix and the polyisocyanate component is within the above-described range, workability can be improved.

The polyisocyanate component is blended so that an isocyanate index (the isocyanate group ratio relative to a total amount 100 of the active hydrogen including, for example, hydroxyl group in the polyol component, and water as the blowing agent) is, for example, 60 or more, preferably 70 or more, and for example, 500 or less, preferably 130 or less.

In this manner, a non-yellowing flexible polyurethane foam of the present invention, i.e., a reaction product of the polyisocyanate component and the polyol component, is produced.

In the non-yellowing flexible polyurethane foam of the present invention, the polyisocyanate component contains 10 to 95 mass% of uretdione bimolecular-product of pentamethylenediisocyanate.

Therefore, a non-yellowing flexible polyurethane foam with soft touch and excellent non-yellowing characteristics can be produced.

That is, the non-yellowing flexible polyurethane foam of the present invention has a density (measured in accordance with Examples to be described later) of, for example, 38.0 kg/m$^3$ or more, preferably 38.2 kg/m$^3$ or more, and for example, 45.0 kg/m$^3$ or less, preferably 43.0 kg/m$^3$ or less, more preferably, 42.0 kg/m$^3$ or less.

The non-yellowing flexible polyurethane foam of the present invention has a hardness (25%CLD, measured in accordance with Examples to be described later) of, for example, 3.0N/100 cm$^2$ or more, preferably 4.0N/100 cm$^2$ or more, more preferably, 4.2N/100 cm$^2$ or more, and for example, 40.0N/100 cm$^2$ or less, preferably 30.0N/100 cm$^2$ or less, more preferably, 20.0N/100 cm$^2$ or less, even more preferably 15.0N/100 cm$^2$ or less, even more preferably 10.0N/100 cm$^2$ or less, even more preferably 6.0N/100 cm$^2$ or less, even more preferably 5.0N/100 cm$^2$ or less, particularly preferably, 4.5N/100 cm$^2$ or less.

The non-yellowing flexible polyurethane foam of the present invention has an elongation at break (measured in accordance with Examples to be described later) of, for example, 60% or more, preferably 65% or more, more preferably, 70% or more, even more preferably 75% or more, particularly preferably, 85% or more, for example, 90% or less.

The non-yellowing flexible polyurethane foam of the present invention has a light resistance Δb (measured in accordance with Examples to be described later) of, for example, 9.5 or more, preferably 10.0 or more, and for example, 15.0 or less, preferably 12.0 or less.

Therefore, the produced non-yellowing flexible polyurethane foam can be effectively used, for example, as an elastic material for distribution of body pressure material, firming agent, sound absorbing material, shock absorbing material, vibration absorbing material, optical material in the field of automobiles, furniture, beddings, electronic materials, medical field, apparel, and sanitary materials.

To be more specific, the non-yellowing flexible polyurethane foam can be used for, for example, seat, head rest, bedding such as pillow and mattress, sofa, cushioning material for nursing care, leisure sheet, supporter, firming agent for wigs, filter, microphone cover, earphone cover, headphone cover, cushion floor material, cosmetics puff, medical material, application roll, OA roll, electronic components (for example, computer tablets, smartphones, etc), scouring pad, sanitary pads, and diapers.

In particular, the non-yellowing flexible polyurethane foam can be used for, preferably body pressure distribution cushioning material for apparel or shoes, because of its soft touch and excellent non-yellowing characteristics. To be specific, the non-yellowing flexible polyurethane foam can be used for shoulder pads, knee pads, elbow pads, bathing suits pads, tongue portion of shoes, insole, medical materials, and apparel materials, and particularly, is suitable for brassiere pads and brassiere cups.

With the brassiere pad and brassiere cup of the present invention formed by using an apparel material formed from the non-yellowing flexible polyurethane foam of the present invention, touch and non-yellowing characteristics can be improved.

Examples

The specific numeral values used in the description below, such as mixing ratio (content), physical property values, and parameters can be replaced with corresponding mixing ratio (content), physical property values, parameters in the above-described "DESCRIPTION OF EMBODIMENTS", including the upper limit value (numeral values defined with "or less", and "less than") or the lower limit value (numeral values defined with "or more", and "more than").

The measurement methods used in Preparation Examples, Synthesis Examples, and Examples and Comparative Examples are described below.

1. Measurement method

<Isocyanate group concentration (unit: mass%), isocyanate group conversion rate (unit: mass%)>

The isocyanate group concentration (isocyanate group content) was measured using a potential difference titrator (manufactured by Kyoto Electronics Manufacturing Co., Ltd., model number: AT-510) by toluene/dibutylamine·hydrochloric acid method in accordance with JIS K-1603-1 (2007), and the isocyanate group conversion rate of the measurement sample was calculated based on the formula below.

$$\text{The isocyanate group conversion rate} = 100 - (\text{isocyanate group concentration of the}$$

reaction mixture after completion of uretdione formation and/or trimerization reaction/

isocyanate group concentration of the reaction liquid before uretdione formation and/or

$$\text{trimerization reaction} \times 100)$$

<Isocyanate monomer concentration (unit: mass%)>

Pentamethylenediisocyanate produced in the same manner as in Example 1 of DESCRIPTION of WO2012/121291 or commercially available hexamethylenediisocyanate as a standard sample is used, and labeled with dibenzylamine. The concentration of the unreacted pentamethylenediisocyanate monomer or hexamethylenediisocyanate monomer was calculated based on the calibration curve made from the area value of a chromatogram obtained under HPLC Measurement Conditions below.
Device; Prominence (manufactured by Shimadzu Corporation)
Pump LC-20AT
Degasser DGU-20A3
Autosampler SIL-20A
Column constant temperature bath COT-20A
Detector SPD-20A
Column; SHISEIDO SILICA SG-120
Column temperature; 40°C
Eluent; n-hexane/methanol/1,2-dichloroethane = 90/5/5 (volume ratio)
Flow rate;0.2 mL/min
Detection method; UV 225 nm

<Viscosity (unit: mPa·s)>

The viscosity of the measurement sample was measured at 25 C using type E viscometer TV-30 (rotor angle: 1°34', rotor diameter: 24 cm) manufactured by TOKI Sangyo Co., Ltd. in accordance with Corn and plate method of JIS K5600-2-3 (2014). The number of revolution of the corn and plate at the time of measurement was changed suitably in the range of 100rpm to 2.5rpm in accordance with the increase in the viscosity.

<Uretdione bimolecular-product concentration (unit: mass%)>

In the chromatogram obtained with the GPC measurement conditions below, the peak area having a peak top between 280 to 380 of polyethylene oxide-based molecular weight relative to a total area of the peaks was defined as the concentration of the uretdione bimolecular-product of pentamethylenediisocyanate relative to the uretdione derivative of pentamethylenediisocyanate.
Device; HLC-8020 (manufactured by Tosoh Corporation)
Column; G1000HXL, G2000HXL, and G3000HXL (all manufactured by Tosoh Corporation, trade name) connected in series
Column temperature; 40°C
Eluent; tetrahydrofuran
Flow rate; 0.8 mL/min
Detector; refractive index detector
Standard sample; polyethylene oxide (manufactured by Tosoh Corporation, trade name: TSK standard polyethylene oxide)

<Calculation of mole ratio of allophanate group to isocyanurate group with $^1$H-NMR>

$^1$H-NMR was measured with the following device and conditions, and the content of the allophanate group (mole ratio of allophanate group/isocyanurate group) relative to 1 mol of the isocyanurate group in the trimer derivative of aliphatic polyisocyanate was calculated with the following formula. For the criteria for the chemical shift ppm, tetramethylsilane (0 ppm) in the $D^6$-DMSO solvent was used.

Device; JNM-AL400 (manufactured by JEOL)
Conditions; measurement frequency: 400MHz, solvent: D6-DMSO, solute concentration: 5 mass%
Assigned peak (1H) for proton of the allophanate group (NH group in allophanate group): 8.3 to 8.7 ppm
Assigned peak (6H) for proton of the isocyanurate group (methylene group ($CH_2$ group) directly bonded to isocyanurate group): 3.8 ppm

Mole ratio of allophanate group to isocyanurate group = integrated value for assigned peak of proton of allophanate group/(integrated value for assigned peak of proton of isocyanurate group/6)

2. Material

(1) Preparation Example of components of polyisocyanate component (a)

Preparation Example 1 (isocyanate (a-1)(PDI uretdione))

A reactor equipped with a thermometer, stirrer, nitrogen inlet tube, and condenser tube was charged with 500 parts by mass of pentamethylenediisocyanate produced in the same manner as in Example 1 of DESCRIPTION of WO2012/121291 in a nitrogen atmosphere, and nitrogen was introduced in the liquid phase (reaction liquid) of the pentamethylenediisocyanate for 1 hour. After introducing nitrogen for 1 hour, the reaction liquid had a dissolved oxygen concentration of 1 mass ppm. Thereafter, the temperature of the reaction liquid was increased to 150°C. Then, after the reaction was continued for 10 hours at the same temperature, the reaction was terminated. Then, the produced reaction mixture of pentamethylenediisocyanate derivative was allowed to pass through a thin film distillation device (temperature: 120°C, degree of vacuum: 93.3 Pa) to remove unreacted pentamethylenediisocyanate monomer, thereby producing isocyanate (a-1).
The produced isocyanate (a-1) had an isocyanate group concentration of 26.5 mass%, a viscosity at 25°C of 24 mPa·s, an isocyanate monomer concentration of 0.5 mass%, and a content of uretdione bimolecular-product of pentamethylenediisocyanate of 89 mass%.

Preparation Example 2 (isocyanate (a-2)(PDI trimer derivative))

A four-neck flask equipped with a thermometer, stirrer, reflux pipe, and nitrogen inlet tube was charged with 500 parts by mass of pentamethylenediisocyanate produced in the same manner as in Example 1 of DESCRIPTION of WO2012/121291, 0.5 parts by mass of isobutylalcohol, 0.3 parts by mass of 2,6-di (tert-butyl)-4-methylphenol, and 0.3 parts by mass of tris (tridecyl) phosphite, and the mixture was allowed to react at 80°C for 2 hours.
Then, 0.05 parts by mass of N-(2-hydroxypropyl)-N,N,N-trimethylammonium-2-ethylhexanoate was blended as the trimerization catalyst. The isocyanate group concentration was measured, and the reaction was continued until the concentration reaches 48.9 mass% (that is, conversion rate 10 mass%). At the point when the predetermined conversion rate (conversion rate 10 mass%) was reached after 50 minutes, 0.12 parts by mass of o-toluenesulfonamide was added. The produced reaction mixture was allowed to pass through a thin film distillation device (temperature: 150°C, degree of vacuum: 0.093 kPa) to remove unreacted pentamethylenediisocyanate monomer. Furthermore, 0.02 parts by mass of o-toluenesulfonamide and 0.003 parts by mass of benzoyl chloride were added relative to 100 parts by mass of the obtained product, thereby producing isocyanate (a-2).
The isocyanate (a-2) had a chlorine concentration of 63 mass ppm, an isocyanate monomer concentration of 0.5 mass%, an isocyanate group concentration of 24.6 mass%, and a viscosity at 25°C of 2000 mPa·s. The isocyanate (a-2) had a mole ratio of allophanate group to isocyanurate group measured by $^1$H-NMR measurement of, allophanate group/isocyanurate group = 7.4/100 (that is, the content of allophanate group relative to 1 mol of isocyanurate group was 0.074 mol).

Preparation Example 3 (isocyanate (a-3)(PDI trimer derivative))

A four-neck flask equipped with a thermometer, stirrer, reflux pipe, and nitrogen inlet tube was charged with 500 parts by mass of pentamethylenediisocyanate produced in the same manner as in Example 1 of DESCRIPTION of WO2012/121291, 9.6 parts by mass of isobutylalcohol, 0.3 parts by mass of 2,6-di (tert-butyl)-4-methylphenol, and 0.3 parts by mass of tris (tridecyl) phosphite, and the mixture was allowed to react at 80°C for 2 hours.

Then, 0.05 parts by mass of N-(2-hydroxypropyl)-N,N,N-trimethylammonium-2-ethylhexanoate was blended as the trimerization catalyst. The isocyanate group concentration was measured, and the reaction was continued until the concentration reaches 47.1 mass% (that is, conversion rate 10 mass%). The predetermined conversion rate (conversion rate 10 mass%) was reached after 20 minutes, and 0.12 parts by mass of o-toluenesulfonamide was added. The produced reaction mixture was allowed to pass through a thin film distillation device (temperature: 150°C, degree of vacuum: 0.093 kPa) to remove unreacted pentamethylenediisocyanate monomer. Furthermore, 0.02 parts by mass of o-toluenesulfonamide and 0.003 parts by mass of benzoyl chloride were added relative to 100 parts by mass of the obtained product, thereby producing isocyanate (a-3).

The isocyanate (a-3) had a chlorine concentration of 57 mass ppm, an isocyanate monomer concentration of 0.6 mass%, an isocyanate group concentration of 23.5 mass%, and a viscosity at 25°C of 900 mPa·s. The isocyanate (a-3) had a mole ratio of allophanate group to isocyanurate group with $^1$H-NMR measurement of, allophanate group/isocyanurate group = 54.7/100 (that is, the content of allophanate group relative to 1 mol of isocyanurate group was 0.547 mol).

Preparation Example 4 (isocyanate (a-4)(HDI uretdione))

Isocyanate (a-4) was produced in the same manner as in Preparation Example for the isocyanate derivative of Isocyanate (a-1), except that pentamethylenediisocyanate was changed to hexamethylenediisocyanate (manufactured by Mitsui Chemicals, Inc., trade name: TAKENATE 700).

The produced isocyanate (a-4) had an isocyanate group concentration of 24.3%, a viscosity at 25°C of 26 mPa·s, and an isocyanate monomer concentration of 0.4 mass%.

Preparation Example 5 (isocyanate (a-5)(HDI trimer derivative))

A four-neck flask equipped with a thermometer, stirrer, reflux pipe, and nitrogen inlet tube was charged with 500 parts by mass of hexamethylenediisocyanate (manufactured by Mitsui Chemicals, Inc. trade name: TAKENATE 700), 0.4 parts by mass of isobutylalcohol, 0.3 parts by mass of 2,6-di (tert-butyl)-4-methylphenol, and 0.3 parts by mass of tris (tridecyl) phosphite, and the mixture was allowed to react at 80°C for 2 hours.

Then, 0.05 parts by mass of N-(2-hydroxypropyl)-N,N,N-trimethylammonium-2-ethylhexanoate as the trimerization catalyst was blended. The isocyanate group concentration was measured, and the reaction was continued until the concentration reaches 44.8 mass% (that is, conversion rate 10 mass%). The predetermined conversion rate (conversion rate 10 mass%) was reached after 60 minutes, and 0.12 parts by mass of o-toluenesulfonamide was added. The produced reaction mixture was allowed to pass through a thin film distillation device (temperature: 150°C, degree of vacuum: 0.093 kPa) to remove unreacted hexamethylenediisocyanate monomer. Furthermore, 0.02 parts by mass of o-toluenesulfonamide and 0.003 parts by mass of benzoyl chloride were added relative to 100 parts by mass of the obtained product, thereby producing isocyanate (a-5).

The isocyanate (a-5) had a chlorine concentration of 60 mass ppm, an isocyanate monomer concentration of 0.5 mass%, an isocyanate group concentration of 23.0 mass%, and a viscosity at 25°C of 1460 mPa·s. The isocyanate (a-5) had a mole ratio of allophanate group to isocyanurate group with $^1$H-NMR measurement of, allophanate group/isocyanurate group = 8.1/100 (that is, the content of allophanate group relative to 1 mol of isocyanurate group of 0.081 mol).

Preparation Example 6 (isocyanate (a-6): PDI uretdione (high bimolecular-product content))

A reactor equipped with a thermometer, stirrer, nitrogen inlet tube, and condenser tube was charged with 500 parts by mass of pentamethylenediisocyanate produced in the same manner as in Example 1 of DESCRIPTION of WO2012/121291 in a nitrogen atmosphere, and nitrogen was introduced in the liquid phase (reaction liquid) of the pentamethylenediisocyanate for 1 hour. After introducing nitrogen for 1 hour, the reaction liquid had a dissolved oxygen concentration of 1 mass ppm. Thereafter, the temperature of the reaction liquid was increased to 150°C. Then, the reaction was continued at the same temperature for 1 hour, and thereafter, the reaction was terminated. The produced reaction mixture of pentamethylenediisocyanate derivative was allowed to pass through a thin film distillation device (temperature: 120°C, degree of vacuum: 93.3 Pa) to remove unreacted pentamethylenediisocyanate monomer, thereby producing isocyanate (a-6).

The produced isocyanate (a-6) had an isocyanate group concentration of 27.1 mass%, a viscosity at 25°C of 22 mPa·s, an isocyanate monomer concentration of 0.5 mass%, and a content of uretdione bimolecular-product of pentamethylenediisocyanate of 98 mass%.

Preparation Example 7 (isocyanate (a-7)(PDI uretdione and PDI trimer derivative))

A four-neck flask equipped with a thermometer, stirrer, reflux pipe, and nitrogen inlet tube was charged with 500 parts by mass of pentamethylenediisocyanate produced in the same manner as in Example 1 of DESCRIPTION of WO2012/121291, and 0.8 parts by mass of isobutylalcohol, and the mixture was subjected to urethane-forming reaction at 80°C for 2 hours. After urethane-forming reaction, the isocyanate group concentration was 54.3 mass%.

Then, the internal temperature of the flask was set to 60°C, and as the catalyst, 1.6 parts by mass of tri-n-butylphosphine was added. The isocyanate group concentration was measured, and the reaction was continued until the concentration reaches 36.1 mass% (that is, conversion rate 34 mass%). When the predetermined conversion rate (conversion rate 34 mass%) was reached after 4 hours, 1.6 parts by mass of p-toluenesulfonic acid methyl was added to terminate the reaction. The reaction mixture produced in this manner was allowed to pass through a thin film distillation device (temperature: 120°C, degree of vacuum: 0.093 kPa) to remove unreacted pentamethylenediisocyanate, and furthermore, relative to 100 parts by mass of the produced polyisocyanate composition, 0.02 parts by mass of o-toluenesulfonamide was added, thereby producing isocyanate (a-7).

The isocyanate (a-7) had an isocyanate monomer concentration of 0.5 mass%, an isocyanate group concentration of 24.7 mass%, and a viscosity at 25°C of 70 mPa·s. The isocyanate (a-7) had a content of uretdione bimolecular-product of pentamethylenediisocyanate of 50.9 mass%.

(2) Polyol component (b)

(Polyol (b-1))

Polyetherpolyol (manufactured by Mitsui Chemicals, Inc., trade name: Actcall LR-00, number average molecular weight (Mn) 1600, functionality f = 3, OH value = 110 mgKOH/g)

(Polyol (b-2))

Polyetherpolyol (manufactured by Mitsui Chemicals, Inc., trade name: Actcall T-700, number average molecular weight (Mn) 700, functionality f = 3, OH value = 240 mgKOH/g)

(3) Catalyst (c)

(Catalyst (c-1))

33 mass% dipropylene glycol solution of tri ethylenediamine (manufactured by Air Products and Chemicals, Inc., trade name: Dabco-33LV)

(Catalyst (c-2))

70 mass% dipropylene glycol solution of bis(dimethylaminoethyl) ether (manufactured by Momentive, trade name: Niax-A1)

(Catalyst (c-3))

Organic tin compound (manufactured by Momentive, trade name: Formrez UL-28)

(Catalyst (c-4))

Organic tin compound (manufactured by Mitsubishi Chemical Corporation, trade name: Stanoct)

(4) Blowing agent (d)

(Blowing agent (d-1))

Pure water ($H_2O$)

(5) Foam stabilizer (e)

(Foam stabilizer (e-1))

Silicone foam stabilizer (manufactured by Evonic Corporation, trade name: B-8545)

(Foam stabilizer (e-2))

Silicone foam stabilizer (manufactured by Evonic Corporation, trade name: B-8002)

(6) Stabilizer (f)

(Stabilizer (f-1))

Hindered amine compound (light stabilizer, manufactured by BASF Japan, trade name: TINUVIN 765)

(Stabilizer (f-2))

Organic phosphorus compound (antioxidant, manufactured by Johoku Chemical Co. Ltd., trade name: JP-308E)

3. Examples 1 to 9 and Comparative Examples 1 to 7 (Production of non-yellowing flexible polyurethane foam)

(1) Example 1

Of the components (materials) shown in Table 1 below, the components other than the polyisocyanate component were weighed, and in a laboratory having a temperature of 23°C and a relative humidity of 55%, they were blended in accordance with the mixing formulation of Table 1 and stirred so that the mixture was homogeneous, thereby preparing a premix.
The polyisocyanate component separately prepared was weighed in accordance with the mixing formulation of Table 1, and the temperature was adjusted to 23°C.
Thereafter, the polyisocyanate component was added to the premix, and the mixture was stirred with a hand-mixer (number of revolution 5000 rpm) for 15 seconds. Immediately after the stirring, the mixture was quickly put in a tree-made box to foam. A non-yellowing flexible polyurethane foam was produced in this manner.

(2) Examples 2 to 10 and Comparative Examples 1 to 7

A non-yellowing flexible polyurethane foam was produced in the same manner as in Example 1, except that weighing was performed in accordance with the mixing formulation shown in Tables 1 to 4.

Tables 1 to 4 show the mixing formulation and the polyisocyanate component characteristics of Examples 1 to 10 and Comparative Examples 1 to 7.

The content of uretdione bimolecular-product of pentamethylenediisocyanate relative to a total amount of the polyisocyanate component was determined by multiplying the content of uretdione bimolecular-product of pentamethylenediisocyanate relative to a total amount of the uretdione derivative of pentamethylenediisocyanate by the content of uretdione derivative of pentamethylenediisocyanate relative to a total amount of the polyisocyanate component.

4. Evaluation of non-yellowing flexible polyurethane foam

<Measurement method for reaction time (cream time (CT))>

In production of the non-yellowing flexible polyurethane foam of Examples and Comparative Examples, the time from the start of the stirring with the hand-mixer to the time when the mixture started moving based on the reaction between the premix and the polyisocyanate component was defined as cream time.

<Density (unit: kg/m$^3$)>

A measurement sample was made by cutting out a center portion (core) of the non-yellowing flexible polyurethane foam of Examples and Comparative Examples to obtain a rectangular parallelepiped with a size of 10 × 10 × 5 cm. Thereafter, the apparent density of the measurement sample was measured in accordance with JIS K7222 (2005).

<Hardness (25%CLD)(unit: N/100 cm$^2$)>

A measurement sample was made by cutting out a center portion (core) of the non-yellowing flexible polyurethane foam of Examples and Comparative Examples to obtain a rectangular parallelepiped with a size of 10 × 10 × 5 cm. Thereafter, the hardness (25%CLD) of the measurement sample was measured in accordance with JIS K-6400 (2012).

<Elongation at break (unit:%)>

A measurement sample was made by cutting out a center portion of the non-yellowing flexible polyurethane foam of Examples and Comparative Examples to obtain a size of a thickness of 10 mm, and the sample was punched out to have a shape of No. 1 test piece. A tensile test was performed using a tensile and compression testing machine (manufactured by INTESCO co., Ltd., Model205N) in accordance with JIS K-6400 (2012), and elongation at break was calculated.

<Light resistance (Δb)>

A measurement sample was made by cutting out a center portion of the non-yellowing flexible polyurethane foam of Examples and Comparative Examples to obtain a size of a thickness of 10 mm. Thereafter, light (wavelength 270 to 720 nm) including a short wavelength ultraviolet ray was applied to the measurement sample for 24 hours using a QUV weathering tester (manufactured by Q panel) equipped with a ultraviolet ray fluorescent lamp.

The Δb (changed amount of b value) of the low-resilience polyurethane foam before and after light application was measured in accordance with JIS Z8722 (2009) using a color difference meter (manufactured by Tokyo Denshoku CO., LTD., COLOR ACE MODEL TC-1).

Tables 1 to 4 show evaluation of non-yellowing flexible polyurethane foam of Examples 1 to 10 and Comparative Examples 1 to 7.

[Table 1]

| Example No. | | | | Example 1 | Example 2 | Example 3 | Example 4 | Example 5 |
|---|---|---|---|---|---|---|---|---|
| Formulation | | Polyisocyanate component (a) | (a-1)PDI uretdione | 100 | 90 | 90 | 90 | 80 |
| | | | (a-2)PDI trimer derivative | | 10 | | | 20 |
| | | | (a-3)PDI trimer derivative | | | 10 | | |
| | | | (a-4)HDI uretdione | | | | | |
| | | | (a-5)HDI trimer derivative | | | | 10 | |
| | | | (a-6)PDI uretdione (high bimolecular-body content) | | | | | |
| | | | (a-7)PDI uretdione and PDI trimer derivative | | | | | |
| | Resin premix | Polyol component (b) | (b-1)Actcall LR-00 | 70 | 70 | 70 | 70 | 70 |
| | | | (b-2)Actcall T-700 | 30 | 30 | 30 | 30 | 30 |
| | | Catalyst(c) | (c-1)Dabco 33LV | 0.5 | 0.5 | 0.5 | 0.5 | 0.5 |
| | | | (c-2)Niax A-1 | 0.5 | 0.5 | 0.5 | 0.5 | 0.5 |
| | | | (c-3)Formrez UL-28 | 0.2 | 0.2 | 0.2 | 0.2 | 0.2 |
| | | | (c-4)Stanoct | 0.4 | 0.4 | 0.4 | 0.4 | 0.4 |
| | | Blowing agent(d) | (d-1)water($H_2O$) | 5 | 5 | 5 | 5 | 5 |
| | | Foam stabilizer(e) | (e-1)B-8545 | 0.25 | 0.25 | 0.25 | 0.25 | 0.25 |
| | | | (e-2)B-8002 | 0.75 | 0.75 | 0.75 | 0.75 | 0.75 |
| | | Stabilizer(f) | (f-1)Tin.765 | 1.2 | 1.2 | 1.2 | 1.2 | 1.2 |
| | | | (f-2)JP-308E | 1.0 | 1.0 | 1.0 | 1.0 | 1.0 |
| Isocyanate index | | | | 70 | 70 | 70 | 70 | 70 |
| Characteristics of Polyisocyanate component (a) | | | PDI Uretdione bimolecular-body content(mass %) | 89.0 | 80.1 | 80.1 | 80.1 | 71.2 |
| | | | Allophanate group/isocyanurate group mole ratio | - | 0.074 | 0.547 | 0.081 | 0.074 |
| | | | Viscosity at 25°C(mPa·s) | 24 | 40 | 30 | 35 | 60 |
| Evaluation of non-yellowing flexible polyurethane foam | | | Reaction time(CT)(sec) | 92 | 95 | 93 | 98 | 100 |
| | | | Density(kg/m³) | 38.0 | 38.2 | 38.0 | 40.7 | 40.0 |
| | | | Hardness(N/100cm²) | 4.0 | 4.3 | 4.2 | 5.0 | 5.2 |
| | | | Elongation at break(%) | 76 | 80 | 87 | 78 | 76 |
| | | | Light resistanceΔb | 12.8 | 10.3 | 10.3 | 10.4 | 10.2 |

[Table 2]

| Example No. | | | | Example 6 | Example 7 | Example 8 | Example 9 | Example 10 |
|---|---|---|---|---|---|---|---|---|
| Formulation | Polyisocyanate component (a) | | (a-1)PDI uretdione | 50 | 25 | 20 | 20 | |
| | | | (a-2)PDI trimer derivative | 50 | 75 | 80 | | |
| | | | (a-3)PDI trimer derivative | | | | 80 | |
| | | | (a-4)HDI uretdione | | | | | |
| | | | (a-5)HDI trimer derivative | | | | | |
| | | | (a-6)PDI uretdione (high bimolecular-body content) | | | | | |
| | | | (a-7)PDI uretdione and PDI trimer derivative | | | | | 100 |
| | Resin premix | Polyol component (b) | (b-1)Actcall LR-00 | 70 | 70 | 70 | 70 | 70 |
| | | | (b-2)Actcall T-700 | 30 | 30 | 30 | 30 | 30 |
| | | Catalyst(c) | (c-1)Dabco 33LV | 0.5 | 0.5 | 0.5 | 0.5 | 0.5 |
| | | | (c-2)Niax A-1 | 0.5 | 0.5 | 0.5 | 0.5 | 0.5 |
| | | | (c-3)Formrez UL-28 | 0.2 | 0.2 | 0.2 | 0.2 | 0.2 |
| | | | (c-4)Stanoct | 0.4 | 0.4 | 0.4 | 0.4 | 0.4 |
| | | Blowing agent(d) | (d-1)Water($H_2O$) | 5 | 5 | 5 | 5 | 5 |
| | | Foam stabilizer(e) | (e-1)B-8545 | 0.25 | 0.25 | 0.25 | 0.25 | 0.25 |
| | | | (e-2)B-8002 | 0.75 | 0.75 | 0.75 | 0.75 | 0.75 |
| | | Stabilizer(f) | (f-1)Tin.765 | 1.2 | 1.2 | 1.2 | 1.2 | 1.2 |
| | | | (f-2)JP-308E | 1.0 | 1.0 | 1.0 | 1.0 | 1.0 |
| | Isocyanate index | | | 70 | 70 | 70 | 70 | 70 |
| Characteristics of polyisocyanate component (a) | | | PDI Uretdione bimolecular-body content(mass %) | 44.5 | 22.3 | 17.8 | 17.8 | 50.9 |
| | | | Allophanate group/ isocyanurate group mole ratio | 0.074 | 0.074 | 0.074 | 0.547 | 0.000 |
| | | | Viscosity at 25°C(mPa·s) | 220 | 600 | 820 | 400 | 70 |
| Evaluation of non-yellowing flexible polyurethane foam | | | Reaction time(CT)(sec) | 107 | 132 | 162 | 150 | 92 |
| | | | Density(kg/m³) | 42.1 | 43.8 | 45.0 | 43.5 | 42.5 |
| | | | Hardness(N/100cm²) | 6.8 | 8.6 | 14.8 | 12.3 | 7.5 |
| | | | Elongation at break(%) | 72 | 69 | 67 | 70 | 75 |
| | | | Light resistanceΔb | 10.1 | 9.9 | 10.1 | 10.1 | 10.3 |

[Table 3]

| Comparative Example No. | | | | Comparative Example 1 | Comparative Example 2 | Comparative Example 3 | Comparative Example 4 | Comparative Example 5 |
|---|---|---|---|---|---|---|---|---|
| Formulation | | Polyisocyanate component (a) | (a-1)PDI uretdione | | | 10 | | |
| | | | (a-2)PDI trimer derivative | | 100 | 90 | | |
| | | | (a-3)PDI trimer derivative | | | | | |
| | | | (a-4)HDI uretdione | | | | 90 | 90 |
| | | | (a-5)HDI trimer derivative | | | | 10 | 10 |
| | | | (a-6)PDI uretdione (high bimolecular-body content) | 100 | | | | |
| | | | (a-7)PDI uretdione and PDI trimer derivative | | | | | |
| | Resin premix | Polyol component (b) | (b-1)Actcall LR-00 | 70 | 70 | 70 | 70 | 70 |
| | | | (b-2)Actcall T-700 | 30 | 30 | 30 | 30 | 30 |
| | | Catalyst(c) | (c-1)Dabco 33LV | 0.5 | 0.5 | 0.5 | 0.5 | 0.7 |
| | | | (c-2)Niax A-1 | 0.5 | 0.5 | 0.5 | 0.5 | 1.0 |
| | | | (c-3)Formrez UL-28 | 0.2 | 0.2 | 0.2 | 0.2 | 0.2 |
| | | | (c-4)Stanoct | 0.4 | 0.4 | 0.4 | 0.4 | 0.4 |
| | | Blowing agent(d) | (d-1)Water($H_2O$) | 5 | 5 | 5 | 5 | 5 |
| | | Foam stabilizer(e) | (e-1)B-8545 | 0.25 | 0.25 | 0.25 | 0.25 | 0.25 |
| | | | (e-2)B-8002 | 0.75 | 0.75 | 0.75 | 0.75 | 0.75 |
| | | Stabilizer(f) | (f-1)Tin.765 | 1.2 | 1.2 | 1.2 | 1.2 | 1.2 |
| | | | (f-2)JP-308E | 1.0 | 1.0 | 1.0 | 1.0 | 1.0 |
| | Isocyanate index | | | 70 | 70 | 70 | 70 | 70 |
| Characteristics of polyisocyanate component (a) | | | PDI Uretdione bimolecular-body content(mass %) | 98.0 | - | 8.9 | - | - |
| | | | Allophanate group/ isocyanurate group mole ratio | - | 0.074 | 0.074 | 0.081 | 0.081 |
| | | | Viscosity at 25°C(mPa·s) | 23 | 2000 | 1300 | 35 | 35 |
| Evaluation of non-yellowing flexible polyurethane foam | | | Reaction time(CT)(sec) | 92 | 175 | 170 | 195 | 90 |
| | | | Density(kg/m³) | 37.6 | 52.0 | 49.0 | 48.2 | 48.0 |
| | | | Hardness(N/100cm²) | 3.2 | 23.0 | 21.1 | 7.2 | 6.7 |
| | | | Elongation at break(%) | 67 | 59 | 63 | 65 | 63 |
| | | | Light resistanceΔb | 15.2 | 10.3 | 10.1 | 10.2 | 18.7 |

22

[Table 4]

| Comparative Example No. | | | Comparative Example 6 | Comparative Example 7 |
|---|---|---|---|---|
| Formulation | Polyisocyanate component (a) | (a-1)PDI uretdione | | |
| | | (a-2)PDI trimer derivative | 10 | |
| | | (a-3)PDI trimer derivative | | 10 |
| | | (a-4)HDI uretdione | 90 | 90 |
| | | (a-5)HDI trimer derivative | | |
| | | (a-6)PDI uretdione (high bimolecular-body content) | | |
| | | (a-7)PDI uretdione and PDI trimer derivative | | |
| | Resin premix — Polyol component (b) | (b-1)Actcall LR-00 | 70 | 70 |
| | | (b-2)Actcall T-700 | 30 | 30 |
| | Catalyst(c) | (c-1)Dabco 33LV | 0.7 | 0.7 |
| | | (c-2)Niax A-1 | 1.0 | 1.0 |
| | | (c-3)Formrez UL-28 | 0.2 | 0.2 |
| | | (c-4)Stanoct | 0.4 | 0.4 |
| | Blowing agent(d) | (d-1)Water($H_2O$) | 5 | 5 |
| | Foam stabilizer(e) | (e-1)B-8545 | 0.25 | 0.25 |
| | | (e-2)B-8002 | 0.75 | 0.75 |
| | Stabilizer(f) | (f-1)Tin.765 | 1.2 | 1.2 |
| | | (f-2)JP-308E | 1.0 | 1.0 |
| Isocyanate index | | | 70 | 70 |
| Characteristics of polyisocyanate component (a) | | PDI Uretdione bimolecular-body content(mass %) | - | - |
| | | Allophanate group/isocyanurate group mole ratio | 0.074 | 0.547 |
| | | Viscosity at 25°C(mPa·s) | 40 | 30 |
| Evaluation of non-yellowing flexible polyurethane foam | | Reaction time(CT)(sec) | 192 | 185 |
| | | Density(kg/m³) | 47.5 | 47.0 |
| | | Hardness(N/100cm²) | 6.5 | 6.3 |
| | | Elongation at break(%) | 63 | 65 |
| | | Light resistanceΔb | 10.2 | 10.2 |

[Details of abbreviations in Tables 1 to 4]

Details of the abbreviations used in Tables 1 to 4 are shown below.

Actcall LR-00: polyetherpolyol (manufactured by Mitsui Chemicals, Inc., number average molecular weight (Mn) 1600, functionality f = 3, OH value = 110 mgKOH/g)

Actcall T-700: polyetherpolyol (manufactured by Mitsui Chemicals, Inc., number average molecular weight (Mn) 700, functionality f = 3, OH value = 240 mgKOH/g)

Dabco 33LV: 33 mass% dipropylene glycol solution of triethylenediamine (manufactured by Air Products and Chemicals, Inc.)

Niax A-1: 70 mass% dipropylene glycol solution of bis(dimethylaminoethyl) ether (manufactured by Momentive)

Formrez UL-28: organic tin compound (manufactured by Momentive)

Stanoct: organic tin compound (manufactured by Mitsubishi Chemical Corporation)

B-8545: silicone foam stabilizer (manufactured by Evonic Corporation)

B-8002: silicone foam stabilizer (manufactured by Evonic Corporation)

Tin.765: hindered amine compound (light stabilizer, manufactured by BASF Japan)

JP-308E: organic phosphorus compound (antioxidant, manufactured by Johoku Chemical Co. Ltd.)

While the illustrative embodiments of the present invention are provided in the above description, such is for illustrative purpose only and it is not to be construed as limiting in any manner. Modification and variation of the present invention that will be obvious to those skilled in the art is to be covered by the following claims.

Industrial Applicability

The non-yellowing flexible polyurethane foam of the present invention can be used in a wide range in the field of, for example, automobiles, furniture, bedding, electronic materials, medical, apparel, and sanitary materials.

**Claims**

1. A non-yellowing flexible polyurethane foam produced by allowing a polyisocyanate component to react with a polyol component in the presence of at least a catalyst and a blowing agent, wherein the polyisocyanate component contains 10 to 95 mass% of uretdione bimolecular-product of pentamethylenediisocyanate.

2. The non-yellowing flexible polyurethane foam of Claim 1, wherein the polyisocyanate component contains a uretdione derivative of pentamethylenediisocyanate, which includes the uretdione bimolecular-product, and a trimer derivative of aliphatic polyisocyanate.

3. The non-yellowing flexible polyurethane foam of Claim 2, wherein the trimer derivative comprises an isocyanurate group and an allophanate group, and the content of the allophanate group is 0.10 mol or more and 0.70 mol or less relative to 1 mol of the isocyanurate group.

4. The non-yellowing flexible polyurethane foam of Claim 2, wherein the aliphatic polyisocyanate is pentamethylenediisocyanate and/or hexamethylenediisocyanate.

5. An apparel material formed from the non-yellowing flexible polyurethane foam of Claim 1.

6. A brassiere pad formed from the apparel material of Claim 5.

7. A brassiere cup including the brassiere pad of Claim 6.

8. A method for producing non-yellowing flexible polyurethane foam, the method including

    allowing a polyisocyanate component containing 10 to 95 mass% of a uretdione bimolecular-product of pentamethylenediisocyanate to react with a polyol component in the presence of at least a catalyst and a blowing agent.

## INTERNATIONAL SEARCH REPORT

| International application No. |
| --- |
| PCT/JP2016/063700 |

**A. CLASSIFICATION OF SUBJECT MATTER**
*C08G18/00*(2006.01)i, *A41C3/14*(2006.01)i, *C08G18/79*(2006.01)i, *C08G101/00* (2006.01)n

According to International Patent Classification (IPC) or to both national classification and IPC

**B. FIELDS SEARCHED**

Minimum documentation searched (classification system followed by classification symbols)
C08G18/00, A41C3/14, C08G18/79, C08G101/00

Documentation searched other than minimum documentation to the extent that such documents are included in the fields searched
Jitsuyo Shinan Koho          1922–1996    Jitsuyo Shinan Toroku Koho    1996–2016
Kokai Jitsuyo Shinan Koho    1971–2016    Toroku Jitsuyo Shinan Koho    1994–2016

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2011-201863 A (Mitsui Chemicals, Inc.), 13 October 2011 (13.10.2011), entire text (Family: none) | 1-8 |
| A | JP 2007-332193 A (Asahi Kasei Chemicals Corp.), 27 December 2007 (27.12.2007), entire text (Family: none) | 1-8 |
| A | JP 2013-224350 A (Asahi Kasei Chemicals Corp.), 31 October 2013 (31.10.2013), entire text (Family: none) | 1-8 |

☒ Further documents are listed in the continuation of Box C.     ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 28 July 2016 (28.07.16) | 09 August 2016 (09.08.16) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

International application No.

PCT/JP2016/063700

C (Continuation). DOCUMENTS CONSIDERED TO BE RELEVANT

| Category* | Citation of document, with indication, where appropriate, of the relevant passages | Relevant to claim No. |
|---|---|---|
| A | JP 2013-245341 A (Asahi Kasei Chemicals Corp.),<br>09 December 2013 (09.12.2013),<br>entire text<br>(Family: none) | 1-8 |
| A | JP 2001-026632 A (Degussa-Huels AG.),<br>30 January 2001 (30.01.2001),<br>entire text<br>& EP 1063269 A2 & DE 19928290 A<br>& CA 2312462 A1 | 1-8 |
| A | WO 2012/121291 A1 (Mitsui Chemicals, Inc.),<br>13 September 2012 (13.09.2012),<br>entire text<br>& JP 5849088 B & US 2013/0338330 A1<br>entire text<br>& EP 2684867 A1 & CN 103347852 A<br>& KR 10-2013-0127504 A & TW 201302680 A | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9104738 B
- WO 2012121291 A

- JP 61129173 A

**Non-patent literature cited in the description**

- *JIS K,* 2007, vol. 1557, 1